# EUROPÄISCHE PATENTSCHRIFT

(11) **EP 3 073 616 B1**
(45) Veröffentlichungstag und Bekanntmachung des Hinweises auf die Patenterteilung: **17.05.2017**
(21) Anmeldenummer: 15161108.4
(22) Anmeldetag: 26.03.2015
(51) Int. Cl.: H02K 3/493, H02K 15/00

(54) **SPREIZBARER NUTVERSCHLUSS FÜR EINE ELEKTRISCHE MASCHINE**
EXPANDABLE SLOT SEAL FOR AN ELECTRIC MACHINE
FERMETURE À ENCOCHE EXTENSIBLE POUR UNE MACHINE ÉLECTRIQUE

(43) Veröffentlichungstag der Anmeldung: 28.09.2016
(73) Patentinhaber: Siemens Aktiengesellschaft, 80333 München (DE)
(72) Erfinder: Grübel, André, 90768 Fürth (DE); Schirm, Dieter, 96149 Breitengüßbach (DE)

(56) Entgegenhaltungen:
- EP-A1- 2 706 649
- DE-A1- 1 538 935
- JP-A- S61 247 256
- US-A1- 2007 075 604

## Beschreibung

Die Erfindung betrifft eine Nutverschlussvorrichtung zum Verschließen einer Nut eines Stators oder eines Läufers einer elektrischen Maschine. Durch die Nutverschlussvorrichtung können elektrische Leitelemente, beispielsweise Kupferstäbe, durch welche eine Drehstromwicklung gebildet ist, in der Nut fixiert oder gehalten werden. Zu der Erfindung gehören auch eine Vorrichtung, die als Stator oder Läufer ausgestaltet sein kann, sowie ein Verfahren zum Verschließen einer Nut des Stators beziehungsweise Läufers.

Die Nuten von elektrischen Maschinen dienen der Aufnahme der isolierten elektrischen Leitelemente beziehungsweise einer Anordnung solcher Leitelemente. Die Nuten weisen in der Regel eine Nutöffnung auf, die zum Luftspalt der elektrischen Maschine hin gerichtet ist. Über die Nutöffnung können bei der Herstellung der elektrischen Maschine die Leitelemente in die Nut eingelegt werden. Insbesondere bei Hochspannungsmaschinen wird mit sogenannten offenen Nuten gearbeitet, bei welchen die Nutöffnung sich über die komplette Nutbreite erstreckt.

Die Nutöffnung muss nach dem Einlegen der Leitelemente verschlossen werden, um ein Aufsteigen der Leitelemente aus der Nut während des Betriebs der elektrischen Maschine zu verhindern. Der Nutverschluss wird üblicherweise mit festen Verschlusselementen, sogenannten Nutkeilen, erreicht. Diese Nutkeile können zum Beispiel aus technischen Schichtpressstoffen durch mechanische Verarbeitung gefertigt sein. Genauso können sie aus thermoplastischen oder duroplastischen Formmassen durch Strangextrusion oder Spritzguss gefertigt sein.

Die Nutverschlussmaterialien können nicht-magnetisierbare Verbundstoffe sein, die somit nicht effektiv zur Magnetisierbarkeit des Stators beitragen, wodurch der Leistungsfaktor, Wirkungsgrad und die Erwärmung und somit resistive Verluste ungünstige Werte aufweisen können.

Um die magnetische Flussführung im Bereich der Nutöffnung zu verbessern, können Nutverschlüsse teilweise weichmagnetisch ausgeführt sein, beispielsweise mittels eisengefüllter ferritischer Schichtpressstoffe. Eine solche Nutverschlussvorrichtung ist beispielsweise aus der EP 2 706 649 A1 bekannt.

Wesentlicher Nachteil bei weichmagnetischen Nutverschlussvorrichtungen ist, dass auf Grund des verwendeten harten Materials der dauerhafte Festsitz in der Nut nicht gewährleistet werden kann, da das weichmagnetische Material auf Grund der magnetischen Wechselbelastungen im Betrieb der Maschine in Kombination mit thermischer Belastung, thermomechanischer Wechselbelastung und Umwelteinflüssen eine Eigenbewegung ausführt, durch welche sich die Nutverschlussvorrichtung losrütteln kann.

Aus der EP 2 706 649 A1 ist bekannt, einen Nutkeil mechanisch zu verformen, um ihn hierdurch in einer Nut aufzuspreizen. Es kann dabei auch eine elektrische Isolationsschicht zwischen den Nutkeil und eine Nutwand eingeklemmt werden. Die Isolationsschicht muss dabei während des Aufspreizens des Nutkeils aufwändig fixiert werden.

Der Erfindung liegt die Aufgabe zu Grunde, mit geringem Zeitaufwand eine Nut einer elektrischen Maschine zu verschließen.

Die Aufgabe wird durch die Gegenstände der unabhängigen Patentansprüche gelöst. Vorteilhafte Weiterbildungen der Erfindung ergeben sich durch die Merkmale der abhängigen Ansprüche.

Die Erfindung umfasst eine Nutverschlussvorrichtung zum Verschließen einer Nut eines Stators oder eines Läufers einer elektrischen Maschine. Als Läufer kann beispielsweise ein Läufer eines Linearmotors oder ein Rotor einer Rotationsmaschine vorgesehen sein. Die Nutverschlussvorrichtung weist ein Verschlusselement auf, das ein ferromagnetisches Material aufweist, z.B. Eisen. Des Weiteren weist das Verschlusselement einen sich entlang einer Längserstreckungsrichtung des Verschlusselements erstreckenden Sollbiegebereich auf, über welchen zwei in einem stumpfen Winkel kleiner als 180° zueinander angeordnete Flanken oder Schenkelbereiche verbunden sind. Mit anderen Worten ist das Verschlusselement der Länge nach geknickt. Die Nutverschlussvorrichtung kann dann in eine Nut eines Stators oder Läufers eingeschoben werden und dort aufgespreizt werden, so dass der Winkel größer wird. Hierdurch lässt sich die Nutverschlussvorrichtung in der Nut festklemmen oder verkeilen.

Bei der erfindungsgemäßen Nutverschlussvorrichtung ist das Verschlusselement derart vorkonfektioniert, dass es mit geringem Arbeitsaufwand in einer Nut angeordnet und fixiert werden kann. Hierzu ist an jeweiligen Rändern der Schenkelbereiche jeweils eine Klebeschicht angeordnet. Mit anderen Worten ist die Klebeschicht jeweils an einem Außenrand des Schenkelbereichs angeordnet. Die Klebeschicht ist dazu ausgebildet, durch Erhitzen ausgehärtet zu werden. Das Erwärmen oder Erhitzen der Klebeschicht bewirkt das Wiedererweichen oder Verflüssigen der Klebeschicht. Anschließend vernetzt oder polymerisiert die Klebeschicht und härtet nicht wiedererweichbar aus. Der Klebstoff für die Klebeschicht kann beispielsweise auf einem Duroplast basieren, insbesondere einem Epoxid oder einem Derivat eines Epoxids. An dem Verschlusselement können auch mehrere Klebeschichten der beschriebenen Art angeordnet sein.

Zu der Erfindung gehören auch Weiterbildungen, durch welche sich zusätzliche Vorteile ergeben.

Gemäß einer Weiterbildung weist die Klebeschicht einen Klebstoff auf Basis eines Reaktionsharzes im B-Zustand auf. Mit anderen Worten ist der Klebstoff teilweise ausgehärtet. Hierdurch ergibt sich der Vorteil, dass der Klebstoff der Klebeschicht selbsthaftend ist, das heißt nicht vom Verschlusselement herunter fließt oder abfließt.

Gemäß einer Weiterbildung ist die Wiedererweichungstemperatur des B-Zustandes auf einen Wert in einem Bereich von 50°C bis 250°C, bevorzugt von 50°C bis 150°°C, insbesondere 70°C bis 120°C, eingestellt. Eine Wiedererweichungstemperatur oberhalb von 50°C, beispielsweise 70°C, weist den Vorteil auf, dass eine versehentliche Erweichung des Klebstoffes beispielsweise während eines Transports der Nutverschlussvorrichtung hin zu einem Werk für elektrische Maschinen, vermieden wird. Das Einstellen der Widererweichungstemperatur kann durch entsprechende Wahl eines Reaktionsharzes erreicht werden.

Gemäß einer Weiterbildung ist ein Querschnitt des Verschlusselements im Sollbiegebereich im Vergleich zu den Schenkelbereichen verjüngt ausgestaltet. Hierdurch ergibt sich in vorteilhafter Weise eine Sollknickstelle.

Gemäß einer Weiterbildung sind die Ränder der Schenkelbereiche abgerundet oder gerundet ausgestaltet. Mit anderen Worten weisen die Ränder ein gerundetes Querschnittsprofil auf. Ein Radius der jeweiligen Rundung ist insbesondere größer als 0,5cm. Durch die Rundung ist vermieden, dass sich das Verschlusselement beim Aufspreizen in der Nut verkeilt. Mit anderen Worten bilden die gerundeten Ränder einen Kugelkopf eines Kugelgelenks. Hierdurch ist eine Führung und Ausrichtung bei der mechanischen Verformung des Verschlusselements gewährleistet.

Gemäß einer Weiterbildung weist die Klebeschicht ein Granulat und/oder Pulver auf. Diese sind durch einen elektrisch isolierenden Füllstoff gebildet. Eine mittlere Korngröße des Granulats und/oder Pulvers kann in einem Bereich von 5 Nanometer bis 50 Mikrometer liegen. Als Füllstoff kann ein anorganisches oder ein organisches Material bereitgestellt sein. Durch Bereitstellen des elektrisch isolierenden Füllstoffs aus einem Feststoff ergibt sich der Vorteil, dass das Verschlusselement aus ferromagnetischem Material nach einer Anordnung und Spreizung in der Nut immer noch beabstandet von der Nutwand, das heißt von dem Blechpaket des Stators oder Läufers, angeordnet ist. Hierdurch wird vermieden, dass ein Strompfad ausgebildet wird, der zwischen dem Verschlusselement einerseits und dem Blechpaket andererseits verläuft. Dies vermeidet Verluste durch Induktionsströme.

Der Füllstoff weist gemäß einer Weiterbildung eine monomodale und gemäß einer anderen Weiterbildung eine multimodale Korngrößenverteilung auf. Eine monomodale Korngrößenverteilung weist den Vorteil auf, dass das Verschlusselement beim Spreizen mit geringem Widerstand über die einzelnen Granulatkörner oder Pulverkörner abrollt. Eine multimodale Korngrößenverteilung weist den Vorteil auf, dass selbst bei Brechen der großen Körner noch kleinere Körner übrig bleiben, über welche das Verschlusselement abrollen kann.

Gemäß einer Weiterbildung sind als Füllstoffe anorganische, pulverige Feststoffe, wie z.B. Quarzmehl, Talkum oder sonstige Metalloxide bereitgestellt. Diese lassen sich reaktionsfrei mit den beschriebenen Klebstoffsorten kombinieren, um die beschriebenen Vorteile zu erreichen. Gemäß einer Weiterbildung sind als Füllstoffe organische Feststoffe, wie z.B. polymere Mikrokugeln, vorgesehen.

Gemäß einer Weiterbildung weist das Verschlusselement, beispielsweise der Nutkeil, gegeneinander elektrisch isolierte, ferromagnetische Blechschichten auf. Eine jeweilige Erstreckungsebene jeder Blechschicht ist senkrecht zu einer Längserstreckungsrichtung des Verschlusselements ausgerichtet. Mit anderen Worten sind die Blechschichten des Verschlusselements nach dem Anordnen in einem Statorblechpaket oder Läuferblechpaket koplanar oder parallel zu den Blechschichten des Blechpakets des Stators beziehungsweise Rotors ausgerichtet. Hierdurch ergibt sich der Vorteil, dass auch in dem Verschlusselement keine Wirbelströme beim Betrieb der elektrischen Maschine induziert werden können.

Gemäß einer Weiterbildung ist ein Wert des stumpfen Winkels derart eingestellt, dass ein in dem Verschlusselement enthaltener Klebstoff bei einem Aufspreizen der Nutverschlussvorrichtung durch Vergrößern des Winkels dennoch unbeschädigt bleibt. Mit anderen Worten ist der Verformungsweg beim Aufspreizen des Verschlusselements derart begrenzt, das ein Versagen oder Brechen des Klebstoffs vermieden ist. Bei dem Klebstoff kann es sich z.B. um einen sogenannten Backlack zum Verkleben und elektrischen Isolieren der besagten Blechschichten handeln.

Die Nutverschlussvorrichtung lässt sich unabhängig von einem Läufer oder Stator bereitstellen, das heißt sie ist als Zuliefererteil zum Herstellen eines Stators oder Läufers ausgestaltet. Nach dem Einbau einer Nutverschlussvorrichtung gemäß der Erfindung in einen Stator oder Läufer ergibt sich eine ebenfalls zur Erfindung gehörende Vorrichtung, welche als Stator oder Läufer für eine elektrische Maschine ausgestaltet ist, wobei in zumindest einer Nut der Vorrichtung elektrische Leitelemente einer Drehstromwicklung angeordnet sind und die Nut mit einem Nutkeil gemäß einer Ausführungsform der Erfindung verschlossen ist. Als Läufer kann die Vorrichtung in der beschriebenen Weise als Rotor oder als Läufer eines Linearmotors ausgestaltet sein.

Zu der Erfindung gehört auch ein Verfahren zum Verschließen einer Nut eines Stators oder Läufers einer elektrischen Maschine. Es wird eine Ausführungsform der erfindungsgemäßen Nutverschlussvorrichtung bereitgestellt und diese in der Nut angeordnet. Die Nutverschlussvorrichtung wird mit einer Kraft beaufschlagt, die z.B. auf den Sollbiegebereich wirken kann. Die Kraft kann zu einem Nutboden der Nut hin ausgerichtet sein. Mittels der Kraft wird das Verschlusselement in der Nut durch eine plastische Verformung gespreizt. Das Verschlusselement kann dabei auf Kanten oder Stufen in Nutwänden der Nut abgestützt werden. Die Kanten oder Stufen können jeweils durch einen Hinterschnitt oder eine Nut oder Aussparung in jeweils einer der Nutwände gebildet sein.

Es erfolgt das Erwärmen der Klebeschicht der Nutverschlussvorrichtung, so dass die Klebeschicht chemisch reagiert und nicht-wiedererweichbar aushärtet.

Gemäß einer Weiterbildung wird eine Abmessung der Nutverschlussvorrichtung derart gewählt, dass ein Querschnitt der Nutverschlussvorrichtung inklusive der Klebeschicht kleiner als ein korrespondierender Nutquerschnitt der Nut ist. Hierdurch wird verhindert, dass beim Einschieben der Nutverschlussvorrichtung in die Nut entlang einer axialen Richtung des Läufers oder Stators die Klebeschicht an einer Nutwandung der Nut abgestreift wird.

Das in der Nut angeordnete Verschlusselement wird gemäß einer Weiterbildung in Bezug auf Nutwände der Nut berührungsfrei in der Nut angeordnet. Hierdurch ergibt sich der Vorteil, dass die Nutwände bezüglich des Verschlusselements elektrisch isoliert sind. Es ist damit die Ausbildung eines Strompfads zwischen dem Blechpaket des Stators beziehungsweise Läufers einerseits und dem Verschlusselement andererseits verhindert. Damit kann es zu keiner Induktion eines Wirbelstroms kommen, der zischen dem Verschlusselement einerseits und dem Blechpaket andererseits fließt.

Gemäß einer Weiterbildung wird das Erwärmen der Klebschicht durch eine Wärmebehandlung in einem Umluftofen und/oder durch induktives Erwärmen des Verschlusselements der Nutverschlussvorrichtung und/oder des Stators/Läufers bewirkt. Durch Erwärmen des Verschlusselements und/oder des Blechpakets des Stators/Läufers ergibt sich der Vorteil, dass die Wärme gleichmäßig verteilt wird und somit die Klebeschicht vollständig in den ausgehärteten Zustand überführt werden kann. Gemäß einer Weiterbildung wird das Verschlusselement aus Blechstücken hergestellt, die beim Ausstanzen von Nutquerschnitten in Blechen für ein Blechpaket der elektrischen Maschine erzeugt wurden. Hierdurch ergibt sich der Vorteil, dass der Ausschuss oder die Verschwendung von Blech beim Herstellen der elektrischen Maschine verringert wird.

Zu der Erfindung gehören auch Weiterbildungen des erfindungsgemäßen Verfahrens, welche Merkmale aufweisen, die bereits im Zusammenhang mit Weiterbildungen der erfindungsgemäßen Nutverschlussvorrichtung beschrieben worden sind. Aus diesem Grund sind entsprechende Weiterbildungen des erfindungsgemäßen Verfahrens hier nicht noch einmal beschrieben.

Im Folgenden ist ein Ausführungsbeispiel der Erfindung beschrieben. Hierzu zeigt:
- FIG 1: eine schematische Darstellung einer elektrischen Maschine mit einer Ausführungsform der erfindungsgemäßen Vorrichtung;
- FIG 2: eine schematische Darstellung einer Nut, die sich in einem Stator oder einem Rotor der elektrischen Maschine von FIG 1 befinden kann;
- FIG 3: eine schematische Darstellung einer Nutverschlussvorrichtung, mit welchem die Nut von FIG 2 verschlossen gerade verschlossen wird.
- FIG 4: eine schematische Darstellung der Nutverschlussvorrichtung von FIG 3 im Lieferzustand.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

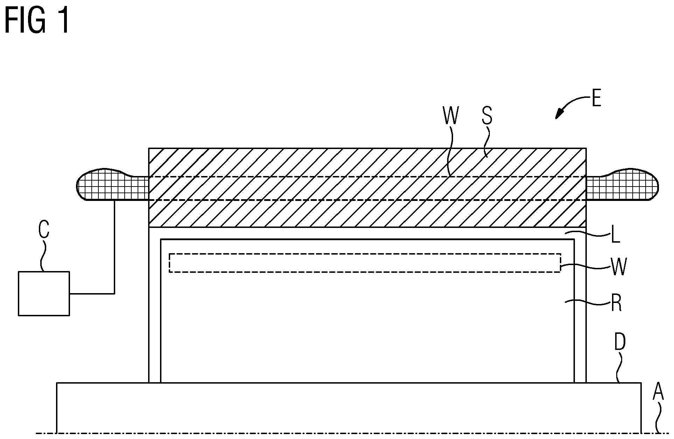

In FIG 1 ist ein Längsschnitt einer elektrischen Maschine E gezeigt, bei der es sich beispielsweise um eine Synchronmaschine oder eine Asynchronmaschine handeln kann. In FIG 1 stellt eine Rotationsachse A auch eine Symmetrieachse der Darstellung dar. Die elektrische Maschine E umfasst einen Stator S, in welchem Wicklungen W elektrischer Spulen angeordnet sind, wobei in FIG 1 nur eine der Wicklungen W dargestellt ist. Die Wicklungen W können aus Leitelementen, z.B. Drähten oder Stäben, gebildet sein. Die Wicklungen W werden durch ein Drehstromquelle C abwechselnd bestromt, wodurch im Inneren des Stators S ein magnetisches Drehfeld in einem Luftspalt L der elektrischen Maschine E entsteht. Die Drehstromquelle C kann beispielsweise ein Wechselrichter sein oder ein festfrequentes elektrisches Versorgungsnetz.

Im Inneren des Stators S befindet sich ein Rotor R, der drehfest mit einer Welle D verbunden ist. Die Welle D ist um die Rotationsachse A drehbar in dem Stator S gelagert. In dem Rotor R können ebenfalls Wicklungen W aus Leitelementen angeordnet sein.

Der Rotor R und/oder der Stator S können jeweils eine Ausführungsform der erfindungsgemäßen Vorrichtung sein.

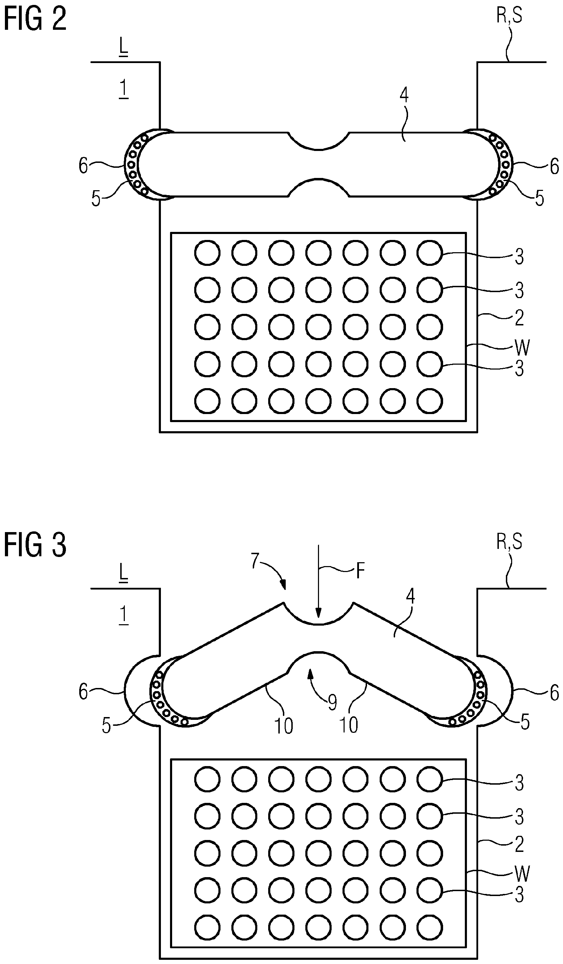

FIG 2 zeigt einen Ausschnitt aus einem Querschnitt, bei dem es sich um einen Querschnitt des Stators S oder des Rotors R handeln kann. In einem Blechpaket 1 des Stators beziehungsweise Rotors können Nuten 2 vorgesehen sein, von denen in FIG 2 der Übersichtlichkeit halber nur eine dargestellt ist. Eine Längserstreckungsrichtung der Nut 2 ist parallel zur Rotationsachse A ausgerichtet. Sie ist senkrecht zur Zeichenebene von FIG 2 ausgerichtet.

In der Nut 2 kann eine der Wicklungen W angeordnet sein, das heißt Leitelemente 3 der Wicklung W erstrecken sich in axialer Richtung in der Nut 2. Der Übersichtlichkeit halber sind in FIG 2 nur einige der Leitelemente 3 mit einem Bezugszeichen versehen. Die Nut 2 ist zum Luftspalt L hin durch ein Verschlusselement 4 verschlossen, das durch eine ausgehärtete Klebeschicht 5 in einem Hinterschnitt 6 der Nut 5 gehalten ist. Die Klebeschicht 5 ist derart dick, dass das Verschlusselement 4 in dem Hinterschnitt 6 spielfrei gehalten ist. Dennoch konnte das Verschlusselement 4 zusammen mit der noch nicht ausgehärteten Klebeschicht 5 in einem einzigen Arbeitsschritt in die Nut 2 eingeschoben werden, wobei das Verschlusselement 4 zusammen mit der Klebeschicht 5 in axialer Richtung von einem axialen Ende des Blechpakets 1 aus entlang einer Längserstreckungsrichtung des Hinterschnitts 6 in die Nut eingeschoben wurde.

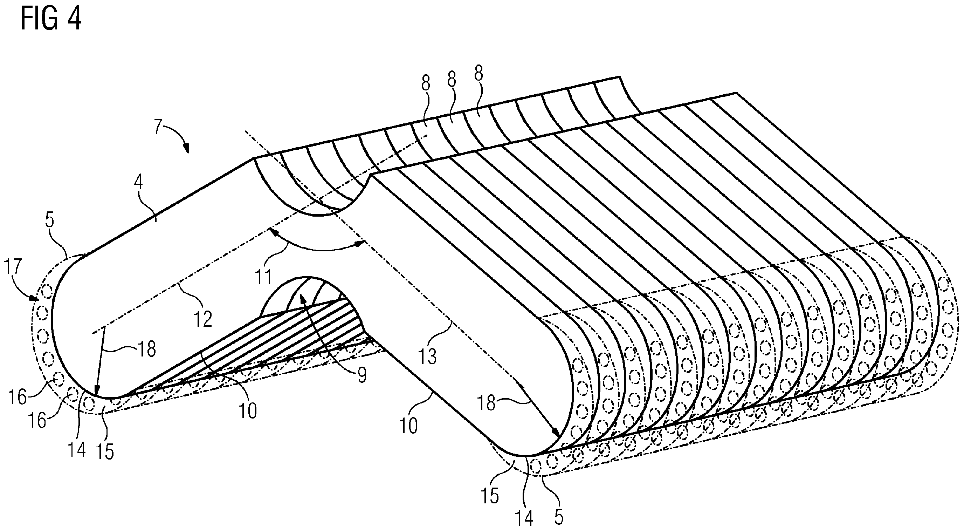

Hierzu wurden das Verschlusselement 4 zusammen mit der Klebeschicht 5 als eine Nutverschlussvorrichtung 7 bereitgestellt, wie sie in FIG 3 und FIG 4 dargestellt ist. Das Verschlusselement 4 kann hergestellt werden, indem gegeneinander elektrisch isolierte ferromagnetische Blechschichten 8 zusammengestapelt oder aufeinander gestapelt werden und erhitzt werden. In FIG 4 sind der Übersichtlichkeit halber nur einige der Blechschichten 8 mit einem Bezugszeichen versehen. Die Isolierung und Verklebung der Blechschichten kann mittels eines sogenannten Backlacks erfolgen. Dies ist an sich aus der Herstellung von Blechpakten, wie dem Blechpaket 1, bekannt. An dem Verschlusselement 4 ist die Klebeschicht 5 angeordnet, wobei sich ein Klebstoff der Klebeschicht 5 in einen B-Zustand, also einem teilpolymerisierten Zustand, befindet. Hierdurch bleibt die Klebeschicht 5 an dem Verschlusselement 4 haften und tropft beispielsweise nicht von dem Verschlusselement 4 ab. Das Verschlusselement 4 kann in der beschriebenen Weise in axialer Richtung in den Hinterschnitt 6 eingeschoben werden.

Um die Nutverschlussvorrichtung 7 kollisionsfrei in die Nut 2 einschieben zu können, ist das Verschlusselement 4 entlang seiner Längsrichtung, das heißt beim Einschieben in axialer Richtung, geknickt. Das Verschlusselement 4 weist hierzu einen Sollbiegebereich 9 auf, über welchen zwei Schenkelbereiche 10 verbunden sind. Im Sollbiegebereich 9 weist ein Querschnitt des Verschlusselements, wie er in FIG 2, FIG 3 und FIG 4 gezeigt ist, eine Verjüngung auf. Mit anderen Worten ist das Verschlusselement 4 im Sollbiegebereich 9 dünner als in den Schenkelbereichen 10. Die Schenkelbereiche 10 sind aufgrund des Knicks im Sollbiegebereich 9 in einem Winkel 11 zueinander angeordnet, welcher einen stumpfen Winkel bildet, der kleiner als 180° ist. Mit anderen Worten sind Längsachsen 12, 13 der Schenkelbereiche 10, wie sie sich im Querschnittsprofil ergeben, in dem Winkel 11 zueinander ausgerichtet. Durch den Knick ist das Verschlusselement 4 gewölbeartig aufgebaut.

Nach dem Einschieben der Nutverschlussvorrichtung 7 in die Nut 2 ragen Enden 14 der Schenkelbereiche 10 in jeweils einen Hinterschnitt 6. An den Enden 14 ist jeweils die Klebeschicht 5 angeordnet.

In einem Klebstoff 15 der Klebeschicht 5 können Füllstoffelemente 16 eines Füllstoffs 17 angeordnet sein. Die Füllstoffelemente 16 sind elektrisch isolierende. Es kann sich bei den Füllstoffelementen 16 beispielsweise um Körner eines Granulats oder Pulvers, z.B. eines Quarzsandes oder eines Quarzpulvers, handeln. Durch den Füllstoff 17 wird, wie in FIG 2 gezeigt, das Verschlusselement 4 beabstandet von Nutwänden der Nut 2 im Bereich des Hinterschnitts 6 gehalten.

Durch Beaufschlagen des Verschlusselements 4 mit einer Kraft F in Richtung zum Nutboden wird das Verschlusselement 4 gespreizt. Mit anderen Worten wird der Sollbiegebereich plastisch verformt. Dadurch wird der Winkel 11 vergrößert, bis das Verschlusselement 4 die in FIG 2 gezeigte Form aufweist und damit zusammen mit dem Hinterschnitt 6 einen Formschluss bildet, durch welchen eine Bewegung des Verschlusselements 4 in Richtung zum Luftspalt L hin blockiert ist. Des Weiteren klemmt das Verschlusselement 4 derart in der Nut, dass es auch in axialer Richtung fixiert ist. Der Winkel 11 ist derart gewählt, dass bei der mechanischen Verformung des Verschlusselements 4 der Verformungsweg oder die Verformungslänge begrenzt wird, um ein Durchscheren der Klebstoffschicht und damit das Kurschließen der Blechschichten 8 zu verhindern.

Der Füllstoff 17 vereinfacht oder erleichtert auch das Abrutschen oder Abrollen der Enden 14 an der Oberfläche des Hinterschnitts 6. Eine weitere Vereinfachung des Spreizvorgangs ergibt sich durch Abrunden der Enden 14. Ein Radius 18 der Rundungen der Enden 14 ist insbesondere größer als 0,5 cm. Im Bereich des Hinterschnitts 6 können die Nutwände ebenfalls eine Rundung aufweisen. Ein Radius dieser Rundungen ist insbesondere gleich oder größer als der Radius 18 der Rundungen der Enden 14. Indem die seitlichen Flanken des Nutkeils und die Seitenflanken der Blechpaketnut gerundet sind, ergibt sich ein Kugelgelenk, wodurch die Führung und Ausrichtung bei der mechanischen Verformung des Verschlusselements gewährleistet ist. Durch die Verformung werden die seitlichen Flanken exakt der Nutgeometrie angepasst. Der Klebstoff fungiert hierbei als zusätzliche Fixierung, primär jedoch als Isolator des Nutkeils gegenüber dem Blechpaket der elektrischen Maschine.

Anschließend kann die Klebeschicht erhitzt werden.

Eine Größe eines Querschnitts des Nutverschlusselements 7 ist auf das Blechpaket, insbesondere eine Nutbreite der Nut 2 im Bereich des Hinterschnitts 6 abgestimmt. Der Hinterschnitt 6 bildet eine Schiene für das Verschlusselement. Beim Einschieben des Nutverschlusselements 7 kann auf Grund des Blechpaketversatzes einzelner Elektrobleche des Blechpakets 1 Klebstoff beim Einschieben abgestreift werden, wodurch die notwendige flächige Verklebung des Verschlusselements nicht gewährleistet wäre. Daher wird eine Abmessung des Nutverschlusselements derart klein gewählt, dass das Nutverschlusselements 7 inklusive seiner Klebeschicht 5 schmaler ist oder eine geringere Abmessung aufweist, als die Nut 2 im Bereich des Hinterschnitts 6. Hierdurch lässt sich das Nutverschlussvorrichtung 7 in die Nut 2 ohne Abstreifen von Klebstoff einschieben. Indem das Verschlusselement 4 gespreizt wird und die Klebeschicht 5 nach dem Abkühlen den gehärteten Zustand aufweist, sitzt dennoch das Verschlusselement 4 fest in der Nut.

Nach dem Einschieben der Nutverschlussvorrichtung 7 in die Nut, kann die Nutverschlussvorrichtung 7 an den axialen Blechpaketenden mit nicht-magnetischen Nutverschlusskeilen fixiert werden, um die bis zur Aufspreizung des Verschlusselements 4 und der Aushärtung Klebeschicht 5 vorübergehend zu fixieren. Die Polymerisation der Klebeschicht 5 kann durch eine Wärmebehandlung im Umluftofen oder durch induktives Erwärmen der Nutverschlussvorrichtung 7 erfolgen oder erreicht werden.

Durch Bereitstellen eines mit einer Klebeschicht 5 vorkonfektionierten Verschlusselements 4, das heißt durch Bereitstellen der Nutverschlussvorrichtung 7, ergibt sich ein einfacher Applikationsprozess von festen, magnetischen Nutverschlusskeilen, d.h. Verschlusselementen, in einer elektrischen Maschine. Es ist die vollständige Anbindung des Nutkeils über die axiale als auch radiale Blechpaketdimension gewährleistet. Es kann sogar eine Verbesserung des Haftsitzes erreicht werden. Dabei ist die Anzahl der Prozessschritte minimalisiert, da keine zusätzliche Klebeapplikation nötig ist.

Durch Schichtung des Verschlusselements 4 ergibt sich eine erhöhte magnetische Ausnutzung bei gleichzeitiger erhöhter thermischer und mechanischer Robustheit durch Einsatz der geschichteten Backlackbleche. Indem zur Bereitstellung der Blechschichten 8 diejenigen Blechteile verwendet werden, die beim Ausstanzen eines Profils der Nut 2 in den einzelnen Blechen des Blechpakets 1 anfallen, kann eine nahezu vollständige Ausnutzung des Blechpaketschnitts erfolgen.

Insgesamt zeigt das Beispiel, wie durch die Erfindung ein plastisch verformbarer, eingeklebter magnetischer Nutverschluss bereitgestellt werden kann.

## Patentansprüche

1. Nutverschlussvorrichtung (7) zum Verschließen einer Nut (2) eines Stators (S) oder eines Läufers (R) einer elektrischen Maschine (E), mit einem Verschlusselement (4), das ein ferromagnetisches Material aufweist und das entlang einer Längserstreckungsrichtung des Verschlusselements (4) einen Sollbiegebereich (9) aufweist, über welchen zwei in einem stumpfen Winkel (11) kleiner als 180° zueinander angeordnete Schenkelbereiche (10) verbunden sind,
**dadurch gekennzeichnet, dass** an jeweiligen Rändern (14) der Schenkelbereiche (10) jeweils eine Klebeschicht (5) angeordnet ist und die Klebeschicht (5) dazu ausgelegt ist, durch Erhitzen gehärtet zu werden.

2. Nutverschlussvorrichtung (7) nach Anspruch 1, wobei ein Querschnitt des Verschlusselements (4) im Sollbiegebereich (9) im Vergleich zu den Schenkelbereichen (10) verjüngt ausgestaltet ist.

3. Nutverschlussvorrichtung (7) nach einem der vorhergehenden Ansprüche, wobei die Ränder (14) ein gerundetes Querschnittprofil aufweisen, wobei ein Radius (18) der jeweiligen Rundung insbesondere größer als 0,5 Zentimeter ist.

4. Nutverschlussvorrichtung (7) nach einem der vorhergehenden Ansprüche, wobei die Klebeschicht (5) ein Granulat und/oder Pulver aus einem elektrisch isolierenden Füllstoff (17) aufweist.

5. Nutverschlussvorrichtung (7) nach Anspruch 4, wobei der Füllstoff (17) eine monomodale oder eine multimodale Korngrößenverteilung aufweist.

6. Nutverschlussvorrichtung (7) nach Anspruch 4 oder 5, wobei der Füllstoff (17) Quarzsand aufweist.

7. Nutverschlussvorrichtung (1) nach einem der vorhergehenden Ansprüche, wobei die Klebeschicht (5) einen Klebstoff (14) auf Basis eines Reaktionsharzes im B-Zustand (B) aufweist.

8. Nutverschlussvorrichtung (7) nach Anspruch 7, wobei eine Wiedererweichungstemperatur des B-Zustandes (B) einen Wert in einem Bereich von 50 °C bis 250 °C, bevorzugt von 50 °C bis 150 °C, insbesondere 70 °C bis 120 °C, aufweist.

9. Nutverschlussvorrichtung (7) nach einem der vorhergehenden Ansprüche, wobei ein Wert des stumpfen Winkels (17) derart eingestellt ist, dass ein in dem Verschlusselement (4) enthaltener Klebstoff bei einem Aufspreizen der Nutverschlussvorrichtung (7) durch Vergrößern des Winkels (11) unbeschädigt bleibt.

10. Nutverschlussvorrichtung (7) nach einem der vorhergehenden Ansprüche, wobei das Verschlusselement (4) gegeneinander elektrisch isolierte, ferromagnetische Blechschichten (8) aufweist, wobei eine jeweilige Erstreckungsebene jeder Blechschicht (8) senkrecht zu einer Längserstreckungsrichtung des Verschlusselements (4) ausgerichtet ist.

11. Vorrichtung, welche als Stator (S) oder Läufer (R) für eine elektrische Maschine (E) ausgestaltet ist, wobei in zumindest einer Nut (2) der Vorrichtung elektrische Leitelemente (3) einer Drehstromwicklung (W) angeordnet sind und die Nut (2) mit einem Nutverschlusselement (7) nach einem der vorhergehenden Ansprüche verschlossen ist, deren Klebeschicht (5) expandiert und ausgehärtet ist.

12. Verfahren zum Verschließen einer Nut (2) eines Stators (S) oder Läufers (R) einer elektrischen Maschine (R),
- Bereitstellen einer Nutverschlussvorrichtung (7) nach einem der Ansprüche 1 bis 10,
- Anordnen der Nutverschlussvorrichtung (7) in der Nut (2),
- Beaufschlagen der Nutverschlussvorrichtung (7) mit einer Kraft (F), mittels welcher das Nutverschlusselement (7) in der Nut (2) durch eine plastische Verformung gespreizt wird,
- Erwärmen der Klebeschicht (5) der Nutverschlussvorrichtung (7), bis die Klebeschicht polymerisiert,
- Abkühlen der Klebeschicht (5).

13. Verfahren nach Anspruch 12, wobei eine Abmessung der Nutverschlussvorrichtung (7) derart gewählt wird, dass ein Querschnitt der Nutverschlussvorrichtung (7) inklusive der Klebeschicht (5) kleiner als ein Nutquerschnitt der Nut (7) ist.

14. Verfahren nach einem der Ansprüche 12 oder 13, wobei das Erwärmen der Klebeschicht (5) durch eine Wärmebehandlung in einem Umluftofen und/oder durch induktives Erwärmen des Verschlusselements (4) der Nutverschlussvorrichtung (7) und/oder des Stators (S)/Läufers (R) bewirkt wird.

15. Verfahren nach einem der Ansprüche 12 bis 14, wobei das Verschlusselement (4) aus Blechstücken (8) hergestellt wird, die beim Ausstanzen von Nutquerschnitten in Blechen für ein Blechpaket (1) der elektrischen Maschine (E) erzeugt wurden.

## Claims

1. Slot seal device (7) for sealing a slot (2) in a stator (S) or a rotor (R) of an electric machine (E), with a sealing element (4), which has a ferromagnetic material and which, along a longitudinal extension direction of the sealing element (4), has a target bending area (9), across which two limb areas (20) arranged at an obtuse angle (11) of less than 180° in relation to one another are connected,
**characterised in that**
an adhesive layer (5) is arranged on respective edges (14) of the limb areas (10) and the adhesive layer (5) is configured to be cured by being heated.

2. Slot seal device (7) according to claim 1, wherein a cross-section of the sealing element (4) is embodied so as to taper in the target bending area (9) in comparison with the limb areas (10).

3. Slot seal device (7) according to one of the preceding claims, wherein the edges (14) have a rounded cross-sectional profile, wherein a radius (18) of the respective rounding is especially greater than 0.5 centimetres.

4. Slot seal device (7) according to one of the preceding claims, wherein the adhesive layer (5) has a granulate and/or powder made from an electrically insulating filler (17).

5. Slot seal device (7) according to claim 4, wherein the filler (17) has a monomodal or multimodal particle size distribution.

6. Slot seal device (7) according to claim 4 or 5, wherein the filler (17) has quartz sand.

7. Slot seal device (1) according to one of the preceding claims, wherein the adhesive layer (5) has an adhesive (14) based on a reaction resin in the B-state (B).

8. Slot seal device (7) according to claim 7, wherein a resoftening temperature of the B-state (B) has a value in a range of 50°C to 250°C, preferably of 50°C to 150°C, especially 70°C to 120°C.

9. Slot seal device (7) according to one of the preceding claims, wherein a value of the obtuse angle (17) is set such that an adhesive agent contained in the sealing element (4) remains undamaged when the slot seal device (7) is expanded by enlarging the angle (11).

10. Slot seal device (7) according to one of the preceding claims, wherein the sealing element (4) has ferromagnetic sheet metal layers (8) which are electrically insulated against one another, wherein a respective extension plane of each sheet metal layer (8) is aligned at right angles to a longitudinal extension direction of the sealing element (4).

11. Device, which is embodied as a stator (S) or rotor (R) for an electric machine (E), wherein electrical conductive elements (3) of a three-phase winding (W) are arranged in at least one slot (2) of the device and the slot (2) is sealed with a slot seal element (7) according to one of the preceding claims, the adhesive layer (5) of which is expanded and cured.

12. Method for sealing a slot (2) of a stator (S) or a rotor (R) of an electric machine (R),
- providing a slot seal device (7) according to one of claims 1 to 10,
- arranging the slot seal device (7) in the slot (2),
- applying a force (F) to the slot seal device (7), by means of which force the slot seal element (7) is expanded in the slot (2) by plastic deformation,
- heating the adhesive layer (5) of the slot seal device (7), until the adhesive layer polymerises,
- cooling the adhesive layer (5).

13. Method according to claim 12, wherein one dimension of the slot seal device (7) is selected such that a cross-section of the slot seal device (7) including the adhesive layer (5) is smaller than a slot cross-section of the slot (7).

14. Method according to one of claims 12 or 13, wherein the adhesive layer (5) is heated by a thermal treatment in a convection oven and/or by inductive heating of the sealing element (4) of the slot seal device (7) and/or of the stator (S)/rotor (R).

15. Method according to one of claims 12 to 14, wherein the sealing element (4) is manufactured from pieces of sheet metal (8), which were generated when slot cross-sections were stamped out in sheet metal for a laminated core (1) of the electric machine (E).

## Revendications

1. Dispositif (7) de fermeture d'une encoche pour la fermeture d'une encoche (2) d'un stator (S) ou d'un rotor (R) d'une machine (E) électrique, comprenant un élément (4) de fermeture, qui a un matériau ferromagnétique et qui, le long d'une direction d'étendue en longueur de l'élément (4) de fermeture, a une partie (9) destinée à se plier, par laquelle sont reliées deux parties (10) de branche faisant entre elles un angle (11) obtus plus petit que 180°, **caractérisé en ce qu'**une couche (5) de colle est mise sur des bords (14) respectifs des parties (10) de branche et la couche (5) de colle est conçue pour être durcie par chauffage.

2. Dispositif (7) de fermeture d'une encoche suivant la revendication 1, dans lequel une section transversale de l'élément (4) de fermeture est conformée de manière rétrécie dans la zone (9) destinée à se plier par rapport aux zones (10) de branche.

3. Dispositif (7) de fermeture d'une encoche suivant l'une des revendications précédentes, dans lequel les bords (14) ont un profil de section transversale arrondi, un rayon (18) de l'arrondi étant plus grand notamment que 0,5 centimètre.

4. Dispositif (7) de fermeture d'une encoche suivant l'une des revendications précédentes, dans lequel la couche (5) de colle a un produit granulé et/ou de la poudre en une charge (17) isolante du point de vue électrique.

5. Dispositif (7) de fermeture d'une encoche suivant la revendication 4, dans lequel la charge (17) a une répartition granulométrique monomodale ou multimodale.

6. Dispositif (7) de fermeture d'une encoche suivant la revendication 4 ou 5, dans lequel la charge a du sable de quartz.

7. Dispositif (7) de fermeture d'une encoche suivant l'une des revendications précédentes, dans lequel la couche (5) de colle a une colle (14) à base d'une résine réactive à l'état B (B).

8. Dispositif (7) de fermeture d'une encoche suivant la revendication 7, dans lequel une température de réamollissement de l'état B (B) a une valeur dans la plage de 50°C à 250°C, de préférence de 50°C à 150°C, notamment de 70°C à 120°C.

9. Dispositif (7) de fermeture d'une encoche suivant l'une des revendications précédentes, dans lequel une valeur de l'angle (17) obtus est réglé de manière à ce qu'une colle contenue dans l'élément (4) de fermeture reste non-endommagée lors de l'écartement du dispositif (7) de fermeture d'une encoche par agrandissement de l'angle (11).

10. Dispositif (7) de fermeture d'une encoche suivant l'une des revendications précédentes, dans lequel l'élément (4) de fermeture a des couches (8) de tôle ferromagnétiques isolées électriquement les unes par rapport aux autres, un plan, dans lequel s'étend chaque couche (8) de tôle, étant perpendiculaire à une direction d'étendue longitudinale de l'élément (4) de fermeture.

11. Dispositif, qui est conformé en stator (S) ou en rotor (R) pour une machine (E) électrique, dans lequel, dans au moins une encoche (2) du dispositif, sont disposés des éléments (3) conducteurs de l'électricité d'un enroulement (W) polyphasé et l'encoche (2) est fermée par un élément (7) de fermeture d'une encoche suivant l'une des revendications précédentes, dont la couche (5) de colle est expansée et durcie.

12. Procédé de fermeture d'une encoche (2) d'un stator (S) ou d'un rotor (R) d'une machine (E) électrique, dans lequel
- on se procure un dispositif (7) de fermeture d'une encoche suivant l'une des revendications 1 à 10,
- on met le dispositif (7) de fermeture d'une encoche dans l'encoche (2),
- on applique le dispositif (7) de fermeture d'une encoche avec une force (F), au moyen de laquelle l'élément (7) de fermeture d'une encoche est écarté par une déformation plastique dans l'encoche (2),
- on échauffe la couche (5) de colle du dispositif (7) de fermeture d'une encoche jusqu'à polymérisation de la couche de colle,
- on refroidit la couche (5) de colle.

13. Procédé suivant la revendication 12, dans lequel on choisit une dimension du dispositif (7) de fermeture d'une encoche, de manière à ce qu'une section transversale du dispositif (7) de fermeture d'une encoche, y compris de la couche (5) de colle, soit plus petite qu'une section transversale de l'encoche (7).

14. Procédé suivant l'une des revendications 12 ou 13, dans lequel on provoque l'échauffement de la couche (5) de colle par un traitement thermique dans un four à circulation d'air et/ou par un échauffement par induction de l'élément (4) de fermeture du dispositif (7) de fermeture d'une encoche et/ou du stator (S)/rotor (R).

15. Procédé suivant l'une des revendications 12 à 14, dans lequel on fabrique l'élément (4) de fermeture en pièces (8) de tôle, qui ont été produites par découpage de section transversale d'encoches dans des tôles pour un paquet (1) de tôle de la machine (E) électrique.
